(19) Europäisches Patentamt
European Patent Office
Office européen des brevets

(11) Publication number: 0 065 564
B1

(12) EUROPEAN PATENT SPECIFICATION

(45) Date of publication of patent specification: 02.04.86

(51) Int. Cl.$^4$: C 08 G 59/06, C 08 G 59/14

(21) Application number: 82900078.5

(22) Date of filing: 25.11.81

(86) International application number:
PCT/US81/01565

(87) International publication number:
WO 82/01878 10.06.82 Gazette 82/15

# (54) METHOD FOR PREPARING HIGH MOLECULAR WEIGHT EPOXY RESINS CONTAINING HYDROLYZED GLYCIDYL GROUPS.

(30) Priority: 26.11.80 US 210472
26.11.80 US 210475

(43) Date of publication of application:
01.12.82 Bulletin 82/48

(45) Publication of the grant of the patent:
02.04.86 Bulletin 86/14

(84) Designated Contracting States:
DE FR GB NL

(56) References cited:
US-A-3 405 093
US-A-3 632 836
US-A-3 787 508
US-A-3 824 212
US-A-3 891 525
US-A-3 991 028
US-A-4 122 067
US-A-4 145 324
US-A-4 215 210

Patent Abstracts of Japan, Vol. 4, no. 34, March 22, 1980, page 124C3

(73) Proprietor: THE DOW CHEMICAL COMPANY
2030 Dow Center Abbott Road P.O. Box 1967
Midland, MI 48640 (US)

(72) Inventor: McCRARY, Avis Lloyd
129 Aster Lane
Lake Jackson, TX 77566 (US)
Inventor: STEVENS, Michael Glenn
131 Tulip Trail
Lake Jackson, TX 77566 (US)
Inventor: DAVIS, Rhetta Qualls
117 Fawn Trail
Lake Jackson, TX 77566 (US)
Inventor: CAVITT, Michael Brent
303 S. Yaupon
Lake Jackson, TX 77566 (US)

(74) Representative: Hann, Michael, Dr. et al
Patentanwälte Dr. Michael Hann Dr. H.-G.
Sternagel Marburger Strasse 38
D-6300 Giessen (DE)

EP 0 065 564 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a process for preparing hydrolyzed epoxy resins.

High molecular weight polyepoxide resins have been made more reactive by blending with a hydrolyzed or partially hydrolyzed low molecular weight or high molecular weight epoxy resin as disclosed by Walker in US—A—3 632 836.

Hydrolyzed and partially hydrolyzed epoxy resins have been prepared by dissolving the epoxy resin to be hydrolyzed in an inert organic solvent, admixing the resultant solution with a dilute aqueous solution of an acid catalyst, heating to a temperature of from 50°C to 374°C, washing to remove the acid catalyst and distilling the solvent to recover the hydrolyzed epoxy resin product. Such process is disclosed by Walker in US—A—3 405 093, 3 632 836 and 3 787 508.

Such process requires the necessity for removing and recovering an organic solvent therefrom particularly when it is desired to employ the epoxy resins in the high molecular weight form such as in powder coatings, molding powders, epoxy ester resins for coatings and adhesives. The present invention provides a process for preparing high molecular weight epoxy resin compositions containing hydrolyzed epoxy groups during the preparation of the high molecular weight epoxy resin in the absence of an organic solvent. Such a process is obviously desirable from an environmental standpoint.

The present invention pertains to a process for preparing a high molceular weight epoxy resin composition containing at least one hydrolyzed group by reacting (A) at least one low molecular weight epoxy resin having an average of more than one glycidyl group per molecule with (B) at least one compound having an average of more than one hydroxyl group per molecule in the presence of a catalytic quantity of a catalyst (D) for effecting the reaction between components (A) and (B) characterized by conducting the reaction in the absence of an inert organic solvent and a nonionic dispersant and in the presence of an amount of water (C) stoichiometric with the number of glycidyl groups to be hydrolyzed, said reaction being conducted in the presence of a catalytic quantity of a catalyst (E) for reacting water with a glycidyl group.

US—A—3 824 212 describes the addition of catalysts, such as tetraalkylammonium chloride as an aqueous solution during the preparation of higher molecular weight polyepoxide products by reacting a low molecular weight polyepoxide with a polyhydric phenol. The polyepoxide and the catalyst are heated to 140°C and at atmospheric pressure. At this temperature and pressure, any of the water initially present would be turned to water vapor and the water vapor would be removed from the reactor with the nitrogen gas.

US—A—4 122 267 refers to the preparation of polyhydroxypolyether resins by reacting in water as a dispersion an epoxide compound with a dihydric phenol in the presence of a nonionic dispersant. The process of this patent is performed in the presence of a nonionic dispersant and is lacking a teaching for using water in an amount stoichiometric with the number of hydroxyl groups of an epoxy resin to be hydrolyzed.

In the process of the present invention components (D) and (E) may be added sequentially. Such a process is preferably performed in that components (A), (B) and (C) are mixed and reacted in the presence of a catalytic quantity of component (E) at an atmospheric pressure and at a temperature below the boiling point of water for a time at which the percent epoxide value of the reaction mixture remains substantially constant; thereafter adding a catalytic quantity of component (D) and continuing the reaction at a temperature of from 25°C to 300°C for a time at which the percent epoxide value of the reaction mixture remains substantially constant.

For the purposes herein, the terms low molecular weight and high molecular weight are relative in that it is meant that the high molecular weight epoxy resin has an average molecular weight greater than that of the low molecular weight epoxy resin.

By the term hydrolyzed glycidyl group, it is meant the group represented by the formula

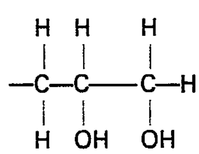

Suitable low molecular weight epoxy resins (A) include, for example, glycidyl ethers of polyhydric aliphatic, cycloaliphatic and aromatic compounds, glycidyl esters of polycarboxylic acids and mixtures thereof.

Particularly suitable are the glycidyl ethers of polyhydric aromatic compounds such as phenols, bisphenols and phenol-aldehyde resins.

Most particularly suitable low molecular weight epoxy resins which can be employed herein include those represented by the formulas

(I)

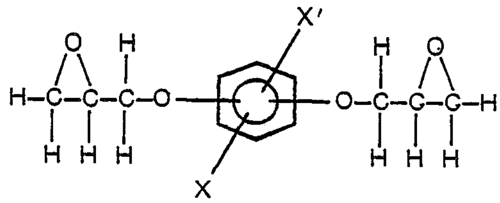

(II)

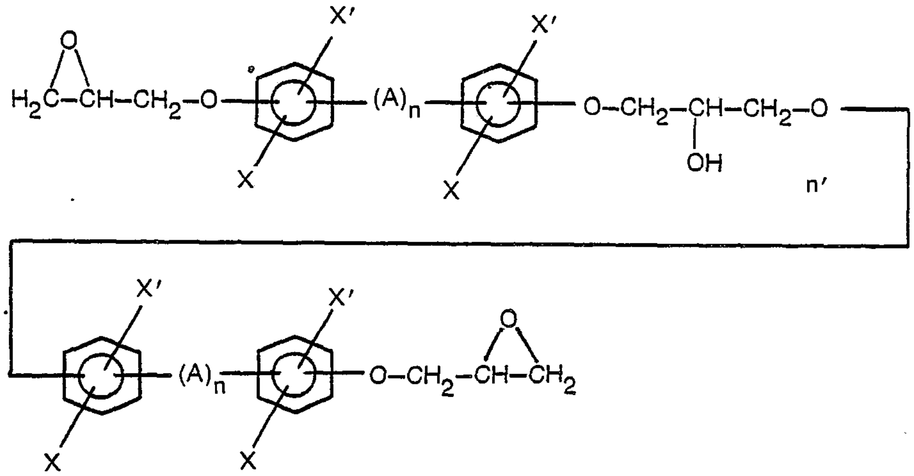

(III)

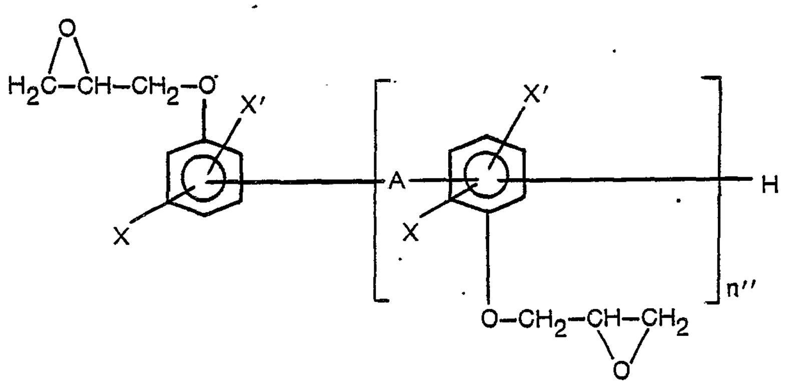

wherein A is a divalent hydrocarbon group having from one to 8 carbon atoms, —O—, —S—, —S—S—,

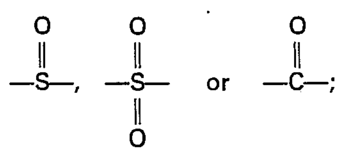

each X and X′ is independently hydrogen, bromine, chlorine or a hydrocarbon group having from 1 to 8 carbon atoms; n has a value of zero or 1; n′ has an average value less than 0.9, preferably less than 0.2 and most preferably from 0.001 to 0.15 and n″ has a value of from 0.001 to 5, preferably from 0.1 to 2.5.

Suitable compounds (B) having an average of more than one hydroxyl group per molecule which can suitably be employed herein include, for example, aliphatic, cycloaliphatic and aromatic compounds having a plurality of hydroxyl groups.

Suitable aliphatic hydroxyl-containing compounds include, for example, ethylene glycol, propylene glycol, diethylene glycol, dipropylene glycol, polyoxypropylene glcyols, glycerine, pentaerythritol, neopentyl glycol, and dibromoneopentyl glycols.

Particularly suitable dihydric phenols which can be employed herein include those represented by the formulas

(IV)

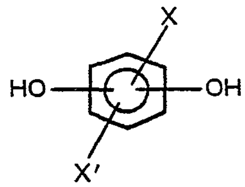

(V)

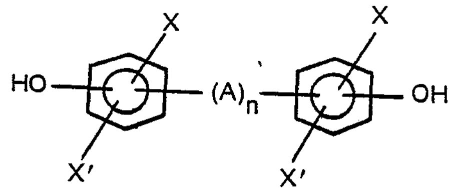

(VI)

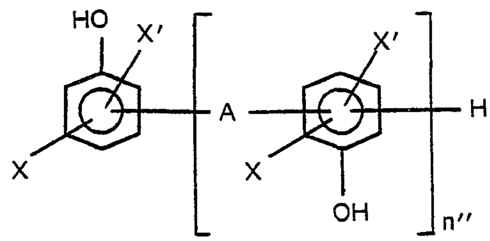

wherein A, X, X', n and n'' are as defined above.

Suitable catalysts which can be employed as component (D) in the process of the present invention when component (B) is an aromatic hydroxyl-containing compound include any catalyst which will catalyze the reaction between a vicinal epoxy group and a phenolic hydroxyl group. Such catalysts include, for example, those disclosed in US—A—3 306 872, 3 341 580, 3 379 684, 3 477 990, 3 547 881, 3 637 590, 3 843 605, 3 948 855, 3 956 237, 4 048 141, 4 093 650, 4 131 633, 4 132 706, 4 171 420 and 4 177 216.

Particularly preferred catalysts are those quaternary phosphonium and ammonium compounds such as for example, ethyltriphenylphosphonium chloride, ethyltriphenylphosphonium bromide, ethyltriphenylphosphonium iodide, ethyltriphenylphosphonium acetate, ethyltriphenylphosphonium diacetate (ethyltriphenylphosphonium acetate·acetic acid complex), tetrabutylphosphonium chloride, tetrabutylphosphonium bromide, tetrabutylphosphonium iodide, tetrabutylphosphonium acetate, tetrabutylphosphonium diacetate (tetrabutylphosphonium acetate·acetic acid complex), butyltriphenylphosphonium tetrabromobisphenate, butyltriphenylphosphonium bisphenate, butyltriphenylphosphonium bicarbonate, ethyltriphenylphosphonium bisphenate, benzyltrimethylammonium chloride and tetramethylammonium hydroxide.

Suitable catalysts which can be employed as component (D) when component (B) is an aliphatic- or cycloaliphatic-containing hydroxyl compound include the Lewis acids such as, for example, boron trifluoride, stannic chloride, aluminum chloride, ferric chloride, aluminium bromide, zinc chloride, silicon tetrachloride, titanium chloride and mixtures thereof.

The quantities of epoxy resin and hydroxyl-containing compounds employed are that required to obtain the desired molecular weight and are usually employed in such quantities as will provide an epoxide:total phenolic hydroxyl ratio of from 40:1 to 1.2:1, preferably from 10:1 to 1.5:1.

The quantity of catalyst component (D) employed depends upon the particular reactants and catalyst being utilized and is usually in the range of from 0.1 to 10 millimoles, preferably from 0.2 to 6 millimoles per equivalent of the epoxide reactant. Higher quantities of catalyst are desired when higher molecular weight products are to be prepared.

The temperature at which the reaction can be conducted depends upon the particular reactants and catalysts employed but usually ranges from 25°C to 300°C, preferably from 90°C to 250°C.

The higher the temperature and the higher the concentration of catalyst, the less time that is required for the reaction to reach a specific degree of completion.

Suitable hydrolysis catalysts (E) for reacting water with a glycidyl group include any suitable acid or base catalyst. Particularly suitable are the acids disclosed in US—A—3 405 093.

The catalyst for the hydrolysis reaction can be employed in any suitable quantity which catalyzes the reaction which is usually from 0.01 to 20, preferably from 0.1 to 0.7 percent by weight based upon the amount of low molecular weight epoxy resin.

The theoretical percent epoxide is calculated by the following formula

$$\text{Theoretical \% epoxide} = \frac{4300\,(\text{EqER} - \text{EqOH})}{\text{WtER} + \text{WtOH}}$$

EqER = epoxide equivalents from the epoxy resin.
EqOH = hydroxyl equivalents from the hydroxyl-containing compound.
WtER = weight of epoxy resin employed.
WtOH = weight of hydroxyl-containing compound employed.

Theoretical EEW is calculated by the following formula

$$\text{Theoretical EEW} = \frac{43}{\text{\% Epoxide Expressed as a Fraction}}$$

Theoretical 100% hydrolysis is calculated by determining what amount of water is required to theoretically hydrolyze the remaining epoxide content of the resin resulting from the reaction of (A) and (B). Thus, $EqH_2O$ (equiv. $H_2O$) = EqER − EqOH for 100% hydrolysis theoretically.

Employing the above formula, the theoretical quantity of water for 100% hydrolysis for Example 1 is calculated as follows: $EqH_2O = 4.197 - 1.997 = 2.2$

The percent hydrolysis is determined as follows:

$$\text{\% hydrolysis} = \frac{\text{TPE A \& B} - \text{TPE A, B \& D}}{\text{TPE A \& B}} \times 100$$

wherein:
TPE A & B = theoretical % epoxide after reaction of A & B
TPE A, B & D = theoretical % epoxide after reaction of A, B & D

The following examples are illustrative of the invention but are not to be construed as to limiting the scope of the invention in any manner.

Examples 1—5

A series of high molecular weight epoxy resins were prepared by adding to a Parr autoclave reactor the indicated quantities of a diglycidyl ether of bisphenol A having an epoxide equivalent weight (EEW) of 184, bisphenol A, water and as a catalyst for the reaction between the epoxy resin and bisphenol A, ethyltriphenylphosphonium acetate·acetic acid complex as a 70% solution in methanol. The reaction was conducted at 120°C for 2 hurs at autogenous pressure, after which the unreacted water was removed by vacuum stripping at 190°C for 30 minutes. The quantities of catalyst in each instance was 0.5 grams of the 70% solution. The quantities of reactants and results are given in the following Table I.

TABLE I

| Component and product property | Example 1 | Example 2 | Example 3 | Example 5 | Example 6 |
|---|---|---|---|---|---|
| Epoxy resin (ER).grams | 772.3 | 752.2 | 752.7 | 752.9 | 816.8 |
| equiv. | 4.197 | 4.088 | 4.091 | 4.092 | 4.439 |
| Bisphenol A (BPA), grams | 227.7 | 247.8 | 247.8 | 247.8 | 185.2 |
| equiv. | 1.997 | 2.174 | 2.174 | 2.174 | 1.625 |
| Water (W), grams | 55 | 55 | 71.6 | 90.1 | 109.9 |
| equiv. | 3.056 | 3.056 | 3.978 | 5.006 | 6.106 |
| Equiv. ratio, EP/BPA/W | 1/.476/.728 | 1/.532/.748 | 1/.531/.972 | 1/.531/1.223 | 1/.366/1.376 |
| Theoretical amount of water to hydrolyze 100% of epoxy groups, equiv. | 2.2 | 1.914 | 1.917 | 1.918 | 2.814 |
| Excess water, equiv. | 0.856 | 1.142 | 2.061 | 3.088 | 3.292 |
| Theoretical EEW/% epoxide | 456/9.43 | 525/8.19 | 525/8.19 | 525.8.19 | 354/12.15 |
| Actual EEW/% epoxide | 492/8.74 | 618/6.96 | 713/6.03 | 902/4.77 | 1117/3.85 |
| % hydrolysis | 7 | 15 | 26 | 41 | 68 |
| Viscosity @ 150°C, centistokes ($m^2/S \times 10^3$) | 345 (0.345) | 713 (0.713) | 1019 (1.019) | 1991 (1.991) | 933 (0.933) |

Examples 6—9

A series of high molecular weight epoxy resins were prepared by adding to a Parr autoclave reactor the indicated quantities of a diglycidyl ether of bisphenol A having an epoxide equivalent weight (EEW) of 184, bisphenol A, water, as a catalyst for reacting the epoxy resin with bisphenol A, ethyltriphenylphosphonium acetate·acetic acid complex as a 70% solution in methanol and as a catalyst for hydrolysis, oxalic acid dihydrate. The reaction temperatures and times were between 120° and 140°C for one hour and 190°C for one hour followed by the application of a vacuum for 30 minutes to remove any unreacted matter. The quantities of reactants and results are given in the following Table II.

TABLE II

| Component and product property | Example 1 | Example 2 | Example 3 | Example 4 |
|---|---|---|---|---|
| Epoxy resin (ER) grams | 857.3 | 857 | 820 | 790.3 |
| equiv. | 4.659 | 4.658 | 4.475 | 4.295 |
| Bisphenol A (BPA), grams | 145 | 150 | 180 | 209.7 |
| equiv. | 1.272 | 1.316 | 1.579 | 1.839 |
| Water (W), grams | 27.5 | 10 | 10 | 9.22 |
| equiv. | 1.528 | 0.556 | 0.556 | 0.512 |
| Equiv. ratio, EP/BPA/W | 1/.273/.328 | 1/.283/.119 | 1/.354/.125 | 1/.428/.119 |
| Theoretical EEW[1] | 557 | 365 | 436 | 521 |
| Actual EEW | 574 | 383 | 446 | 518 |
| % hydrolysis (theoretical) | 45 | 17 | 20 | 21 |
| % hydrolysis (actual[2]) | 48 | 21 | 22 | 21 |
| Viscosity @ 150°C centistokes ($m^2/S \times 10^3$) | 260 (0.260) | 80 (0.080) | 180 (0.180) | 355 (0.355) |

[1] The theoretical EEW includes the reaction with water.
[2] The actual % hydrolysis was determined by change in % epoxide.

Example 10

The hydrolysis reaction was carried out at atmospheric conditions when the temperature for reaction was below the boiling point of water. A reaction mixture was prepared containing 174 g., 1 eq, of a diglycidyl ether of bisphenol A having an EEW of 174; 57 g., 0.5 eq, of bisphenol A; 1.8 g., 0.20 eq. of water and 0.02 moles of oxalic acid. When reacted together at 80°C for 45 minutes, the reaction mixture contained 0.90 eq. of epoxy. Then 0.478 g., 084 moles, of ethyltriphenylphosphonium acetate·acetic acid complex as a 70% solution in methanol was added and the regular resin advancement was carried out to yield a solid resin having 7.4% epoxide.

## Claims

1. A process for preparing a high molecular weight epoxy resin composition containing at least one hydrolyzed group by reacting (A) at least one low molecular weight epoxy resin having an average of more than one glycidyl group per molecule with (B) at least one compound having an average of more than one hydroxyl group per molecule in the presence of a catalytic quantity of a catalyst (D) for effecting the reaction between components (A) and (B) characterized by conducting the reaction in the absence of an inert organic solvent and a nonionic dispersant and in the presence of an amount of water (C) stoichiometric with the number of glycidyl groups to be hydrolyzed, said reaction being conducted in the presence of a catalytic quantity of a catalyst (E) for reacting water with a glycidyl group.

2. The process of Claim 1 characterized in that components (A), (B) and (C) are mixed and reacted in the presence of a catalytic quantity of Component (E) at atmospheric pressure and at a temperature below the boiling point of water for a time at which the percent epoxide value of the reaction mixture remains substantially constant; thereafter adding a catalytic quantity of component (D) and continuing the reaction at a temperature of from 25°C to 300°C for a time at which the percent epoxide value of the reaction mixture remains substantially constant.

3. The process of either of Claims 1 or 2 characterized in that component (A) is a glycidyl ether of an aromatic hydroxyl-containing compound; component (B) is an aromatic hydroxyl-containing compound; component (D) is a phosphonium compound and components (A) and (B) are present in quantities which provide an epoxy:hydroxyl ratio of from 1.2:1 to 40:1.

4. The process of Claim 3 characterized in that component (A) is a diglycidyl ether of a polyhydric phenol represented by the formulas

(I)

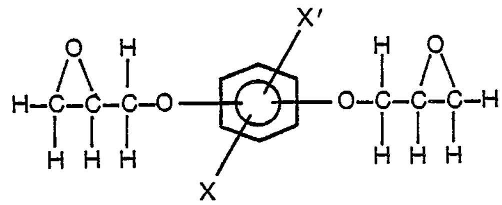

or

(II)

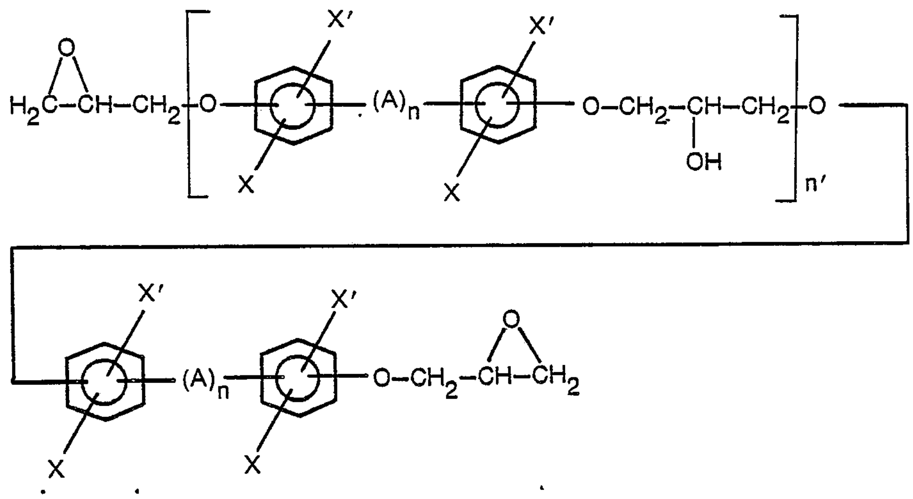

wherein A is a divalent hydrocarbon group having from one to 8 carbon atoms, —O—, —S—, —S—S—,

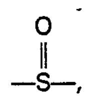, 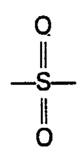 or 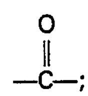;

each X and X′ is independently hydrogen, bromine, chlorine or a hydrocarbon group having from 1 to 8 carbon atoms; n has a value of zero or 1 and n′ has an average value of less than 0.9 and component (B) is represented by the formulas

(IV)

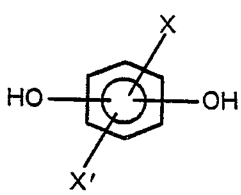

(V)

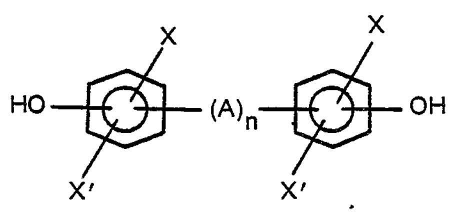

wherein each A, X, X′ and n are as defined above and components (A) and (B) are employed in quantities such that the epoxide:hydroxyl ratio is from 1.5:1 to 10:1.

5. The process of Claim 4 characterized in that component (A) is an epoxy resin represented by formula II wherein n′ has an average value of less than 0.2 and component (B) is a hydroxyl-containing compound represented by formula V.

6. The process of Claim 5 characterized in that each X and X′ is independently hydrogen, chlorine or bromine; each n has a value of 1 and n′ has an average value of from 0.001 to 0.15.

7. The process of Claim 6 characterized in that component (A) is a diglycidyl ether of bisphenol A; component (B) is bisphenol A; catalyst (E) is oxalic acid and catalyst (D) is ethyltriphenylphosphonium acetate·acetic acid complex.

**Patentansprüche**

1. Verfahren zum Herstellen einer Epoxidharzzusammensetzung mit hohem Molekulargewicht und mindestens einer hydrolisierten Gruppe durch Umsetzen von (A) mindestens einem Epoxidharz mit niedrigem Molekulargewicht, das im Mittel mehr als eine Glycidylgruppe pro Molekül aufweist, mit (B) mindestens einer Verbindung, die im Mittel mehr als eine Hydroxylgruppe pro Molekül aufweist in Gegenwart einer katalytischen Menge eines Katalysators (D) zum Ablaufen der Reaktion der Umsetzung der Komponenten (A) und (B), gekennzeichnet durch Ausfüren der Reaktion in Abwesenheit eines inerten organischen Lösungsmittels und eines nichtionogenen Dispergiermittels und in Gegenwart einer Wassermenge (C), die stöchiometrisch mit der Zahl der zu hydrolisierenden Glycidylgruppen ist, wobei die Reaktion in Gegenwart einer katalytischen Menge eines Katalysators (E) für die Umsetzung von Wasser mit einer Glycidylgruppe ausgeführt wird.

2. Verfahren nach Anspruch 1, dadurch gekennzeichnet, daß die Komponenten (A), (B) und (C) gemischt und in Gegenwart einer katalytischen Menge der Komponente (E) bei Atmosphärendruck und einer Temperatur unterhalb des Siedepunktes von Wasser für eine Zeit, in der der prozentuale Epoxidwert der Reaktionsmischung in wesentlichen konstant bleibt, umgesetzt werden, daß anschließend eine katalytische Menge der Komponente (D) zugesetzt und die Reaktion fortgesetzt wird, bei einer Temperatur von 25° C bis 300°C für eine Zeit, in der der prozentuale Epoxidwert der Reaktionsmischung im wesentlichen konstant bleibt.

3. Verfahren nach Ansprüchen 1 oder 2, dadurch gekennzeichnet, daß die Komponente (A) ein Glycidylether einer aromatischen, Hydroxylreste aufweisenden Verbinding ist, die Komponente (B) eine aromatische, Hydroxylreste aufweisende Verbindung ist, die Komponente (D) eine Phosphoniumverbindung ist, und die Komponenten (A) und (B) in einer solchen Menge vorhanden sind, die ein Epoxid:Hydroxylverhältnis von 1,2:1 bis 40:1 ergeben.

4. Verfahren nach Anspruch 3, dadurch gekennzeichnet, daß die Komponente (A) ein Diglycidylether eines mehrwertigen Phenols der folgenden Formeln ist

(I)

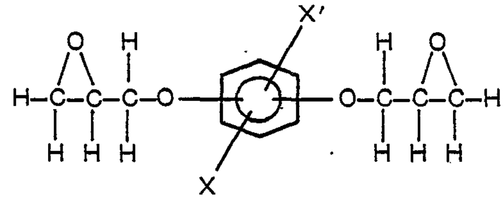

oder

(II)

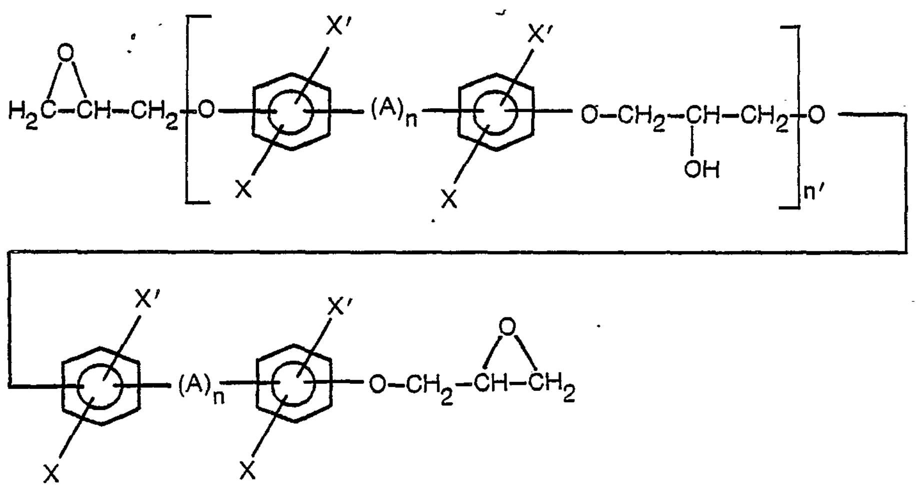

in denen A ein zweiwertiger Kohlenwasserstoffrest mit 1 bis 8 Kohlenstoffatomen, —O—, —S—, —S—S—,

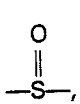, 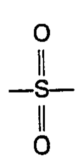 oder 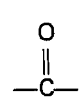

ist, jedes X und X' unabhängig Wasserstoff, Brom, Chlor oder ein Kohlenwasserstoffrest mit 1 bis 8 Kohlenstoffatomen ist, *n* einen Wert von 0 oder 1 aufweist und *n'* einen Mittelwert von kleiner als 0,9 hat und die Komponente (B) die Formeln

(IV)

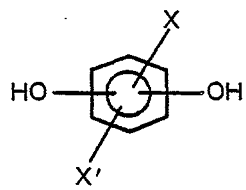

oder (V)

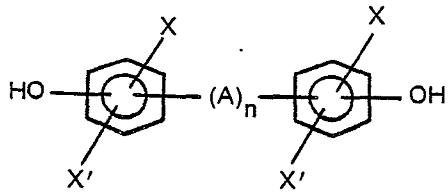

aufweist, in denen jedes A, X, X' und *n* die zuvor angegebenen Definitionen haben und die Komponenten (A) und (B) in solchen Mengen vorhanden sind, die ein Epoxid:Hydroxylverhältnis von 1,5:1 bis 10:1 ergeben.

5. Verfahren nach Anspruch 4, dadurch gekennzeichnet, daß die Komponente (A) ein Epoxidharz der Formel II ist, in der *n'* einen Mittelwert von kleiner 0,2 aufweist und die Komponente (B) eine Hydroxylgruppen aufweisende Verbindung der Formel V ist.

6. Verfahren nach Anspruch 5, dadurch gekennzeichnet, daß jedes X und X' unabhängig Wasserstoff, Chlor oder Brom ist, jedes *n* einen Wert von 1 und jedes *n'* eine Mittelwert von 0,001 bis 0,15 hat.

7. Verfahren nach Anspruch 6, dadurch gekennzeichnet, daß die Komponente (A) ein Glycidylether von Bisphenol A ist, die Komponente (B) Bisphenol A ist, der Katalysator (E) Oxalsäure ist und der Katalysator (D) Ethyltriphenylphosphoniumacetat-Essigsäurekomplex ist.

## Revendications

1. Procédé de préparation d'une composition de résine époxy de poids moléculaire élevé contenant au moins un groupe hydrolysé, qui consiste à faire réagir (A) au moins une résine époxy de bas poids moléculaire ayant en moyenne plus d'une groupe glycidyle par molécule avec (B) au moins un composé ayant en moyenne plus d'un groupe hydroxyle par molécule, en présence d'une quantité catalytique d'un catalyseur (D) servant à effectuer la réaction entre les composants (A) et (B), caractérisé en ce qu'on effectue la réaction en l'absence d'un solvant organique inerte et d'un dispersant non ionique et en présence d'une quantité d'eau (C) stoechiométrique par rapport au nombre de groupes glycidyle à hydrolyser, ladite réaction étant exécutée en présence d'une quantité catalytique d'un catalyseur (E) servant à faire réagir l'eau avec un groupe glycidyle.

2. Procédé selon la revendication 1, caractérisé en ce qu'on mélange et on fait réagir les composants (A), (B) et (C) en présence d'une quantité catalytique du composant (E) sous pression atmosphérique et à une température inférieure au point d'ébullition de l'eau pendant un temps durant lequel le pourcentage d'époxyde du mélange réactionnel demeure sensiblement constant, ensuite on ajoute une quantité catalytique du composant (D) et on poursuit la réaction à une température de 25 à 300°C pendant un temps durant lequel le pourcentage d'époxyde du mélange réactionnel reste sensiblement constant.

3. Procédé selon l'une ou l'autre des revendications 1 ou 2, caractérisé en ce que le composant A est un éther glycidylique d'un composé aromatique contenant des groupes hydroxyle; le composant (B) est un composé aromatique contenant des groupes hydroxyle; le composant (D) est un composé de phosphonium et les composants (A) et (B) sont présents en des quantités assurant un rapport époxy/hydroxyle de 1,2/1 à 40/1.

4. Procédé selon la revendication 3, caractérisé en ce que le composant A est un éther diglycidylique d'un polyphénol représenté par les formules:

(I)

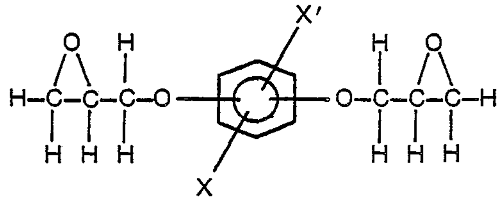

ou

(II)

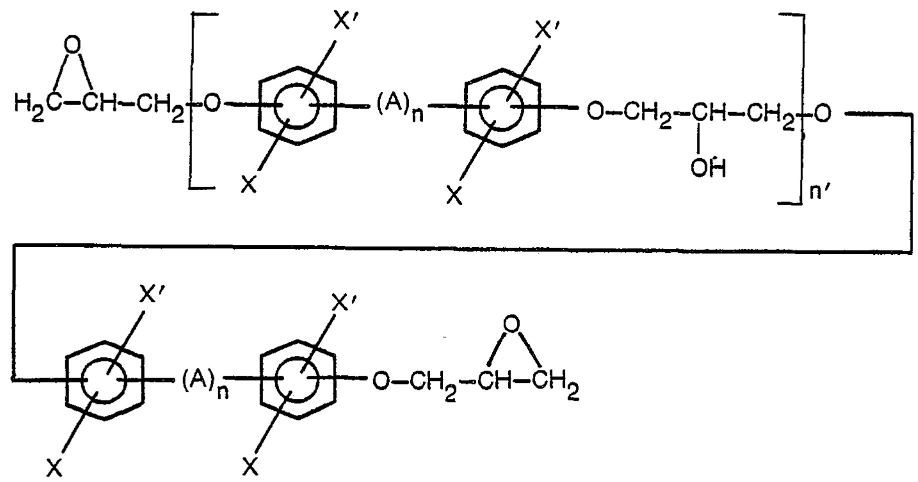

dans lesquelles A est un radical hydrocarboné divalent de 1 à 8 atomes de carbone, —O—, —S—, —S—S—,

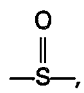, 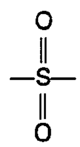 ou 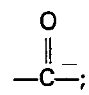;

X et Xé représentent chacun indépendamment, un atome d'hydrogène, de brome ou de chlore ou un radical hydrocarboné ayant de 1 à 8 atomes de carbone; *n* est 0 ou 1, et *n'* a une valeur moyenne inférieure à 0,9, et le composant B est représenté par les formules:

(IV)

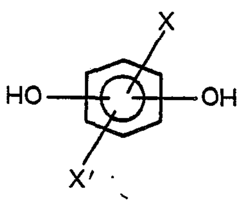

ou

(V)

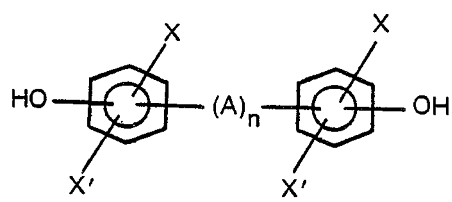

dans lesquelles A, X, X' et *n* sont tous tels que définis plus haut, et les composants A et B sont utilisés en des quantités telles que le rapport époxyde/hydroxyle soit de 1,5/1 à 10/1.

5. Procédé selon la revendication 4, caractérisé en ce que le composant A est une résine époxy répondant à la formule II dans laquelle *n'* a une valeur moyenne de 0,2, et le composant B est un composé contenant des groupes hydroxyle répondant à la formule V.

6. Procédé selon la revendication 5, caractérisé en ce que X et X' représentent chacun, indépendamment, des atomes d'hydrogène, de chlore et de brome; chaque *n* a une valeur de 1 et *n'* a une valeur moyenne allant de 0,001 à 0,15.

7. Procédé selon la revendication 6, caractérisé en ce que le composant (A) est un éther diglycidylique de bisphénol-A; le composant (B) est le bisphénol A; le catalyseur (E) est l'acide oxalique et le catalyseur (D) est le complexe d'acétate d'éthyltriphénylphosphonium et d'acide acétique.